# EUROPEAN PATENT APPLICATION

(11) **EP 1 879 060 A1**
(43) Date of publication of application: **16.01.2008**
(21) Application number: 07111914.3
(22) Date of filing: 06.07.2007
(51) Int. Cl.: G02B 6/38

(54) **Environmentally sealed connector with MT fiber optic locking interface**

(30) Priority: 10.07.2006 US 483836
(71) Applicant: Honeywell International Inc., Morristown, NJ 07962 (US)
(72) Inventor: Anderson, Robert B., Largo, FL 33773 (US)
(74) Representative: Haley, Stephen

(57) **Abstract**

In one aspect, a connector (30) is described. The connector comprises a plurality of optical fibers, at least two MT fiber optic connectors, communicatively coupled to one another utilizing the plurality of optical fibers, each MT fiber optic connector comprises a mating end. The connector further comprises a connector body (47) formed around the MT fiber optic connectors and the plurality of optical fibers, said mating ends of the MT fiber optic connectors accessible from opposite ends of the connector body.

## Description

This invention relates generally to fiber optic interconnections, and more specifically, to methods and apparatus for connecting fiber optic cables in a locked and environmentally sealed manner.

Fiber optic communication systems can transmit data at higher rates than systems utilizing electrical wires. Fiber optic communication systems can also be made lighter than systems utilizing electrical wires, which is a benefit in many applications including aerospace applications. Also, by using fiber to transmit data, radiated emissions associated with using copper as the transmission vehicle are avoided.

Fiber optic communication systems utilize pulses of light to send information across strands of transparent material. These strands of transparent material are referred to as fiber optics. In a typical application, an optical transmitter includes a laser that emits light. The intensity of the light is varied in accordance with the information to be sent. The light is focused on an end of an optical fiber so that the light is transmitted along the fiber.

At the opposite end of the optical fiber, the light is directed onto a photodetector, which transforms the light into an electrical signal. The electrical signal also varies in relation to the information being sent. Typically, multiple fibers are aligned in parallel so a greater quantity of information can be sent along a single cable at once, and so that information can be sent in both directions simultaneously. The optical transmitter and photodetector are often combined in a single device, a transceiver.

When interconnecting fiber optic cables, each individual optical fiber within a cable must be precisely aligned with the mating optical fibers within the other cable. Each optical fiber must also be butted against one another with essentially no gaps. Even a slight misalignment or gap can cause an appreciable loss of light transmitted along the fibers and a degradation of the signal. Devices referred to as connectors can be engaged with mating connectors on other cables, or with mating features on transceivers, to align the fibers with the required precision and hold the fibers in contact with one another. One type of known fiber optic connector is an MT type, which includes a connector housing with a front end and a ferrule movably mounted in the housing.

In certain applications, including military applications, protecting the electronics on the inside of a housing or chassis from the environment is desired.

The prior art includes a connector which has an internal latching structure, and in particular, is used with fiber optic connectors. Two mating connectors of this type can be interconnected, and a fiber optic connection can be provided in a sealed environment, yet the mating connectors can be easily disconnected. This connector includes an inner fiber optic connector assembly that is passed through an outer housing portion and a rotatable collar portion. Once the inner fiber connector assembly is passed through the outer housing portion, the inner fiber connector protrudes from a first side of the sealed connector, and a fiber optic cable extends from the second side of the sealed connector.

The connector described above does not describe an environmentally sealed connector. Additionally, the connector described above cannot be mounted within an electronic package (i.e., a metal chassis). Furthermore, this connector assembly requires that a fiber optic cable be attached to an MT connector before assembled in the housing portion of the connector assembly.

In one aspect, a connector is provided. The connector comprises a plurality of optical fibers, at least two MT fiber optic connectors, communicatively coupled to one another utilizing the plurality of optical fibers, each MT fiber optic connector comprises a mating end. The connector further comprises a connector body formed around the MT fiber optic connectors and the plurality of optical fibers, said mating ends of the MT fiber optic connectors accessible from opposite ends of the connector body.

In another aspect, a method of fabricating a fiber optic interconnection is provided. The method comprises communicatively coupling a first MT connector to a second MT connector, forming a connector body around the coupled MT connectors, such that mating portions of the MT connectors are accessible at opposite ends of the connector body, and inserting the connector body within a connector shell.

In yet another aspect, a connector assembly is provided. The system comprises a plurality of optical fibers, at least two MT fiber optic connectors, communicatively coupled to one another utilizing the plurality of optical fibers, each MT fiber optic connector comprising a mating end, a connector body formed around the MT fiber optic connectors and the plurality of optical fibers, the mating ends of said MT fiber optic connectors accessible from opposite ends of said connector body, and a connector shell configured for insertion and retention of the connector body.

Figure 1 is an illustration of an existing configuration of a transceiver, a first fiber optic cable, a female coupler, a male coupler, a second fiber optic cable, and a connector.

Figure 2 is an illustration of a transceiver, a fiber optic cable terminating at an MT plug, and a connector assembly.

Figure 3 is a rear perspective view of a connector assembly including a rear locking MT connector insert.

Figure 4 is a front perspective view of a connector assembly including a rear locking MT connector insert.

Figure 5 is an illustration of a connector assembly mounted on a chassis of an electronic package.

Methods and apparatus for connecting fiber optic cables are described. In one embodiment, the methods and apparatus provide a locking, environmentally sealed connection between fiber optic cables.

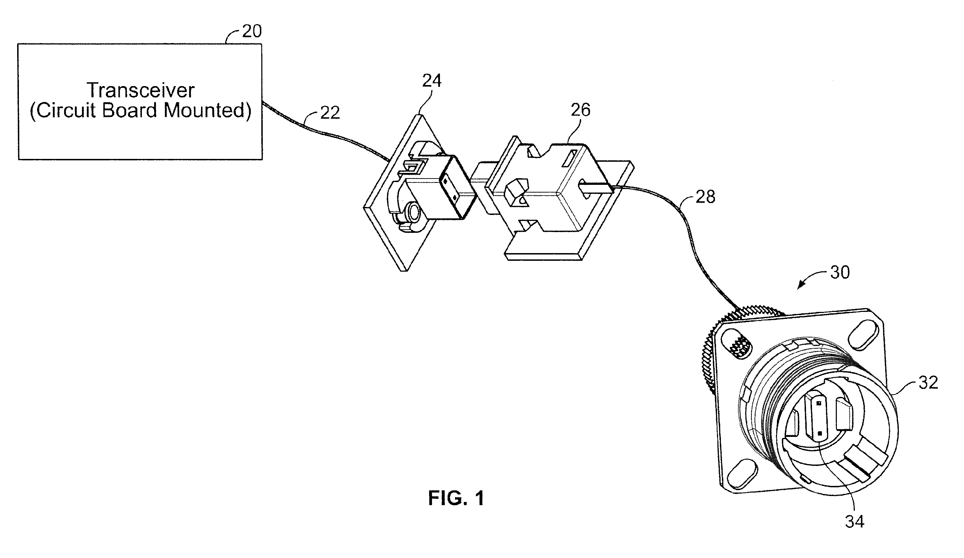

Referring now to the drawings, Figure 1 shows an existing configuration of a transceiver 20, a first fiber optic cable 22, a female coupler 24 including an MT connector, a male coupler 26 including an MT connector, a second fiber optic cable 28, and a connector 30. Connector 30 includes a connector shell 32, an MT connector insert 34, and is manufactured with second fiber optic cable 28 extending from a rear of connector 30. In order for information from transceiver 20 to reach connector 30, first fiber optic cable 22 and second fiber optic cable 28 are mated using couplers 24 and 26. It would be advantageous to find a method of mating a transceiver to a connector, such as connector 30, without the size and weight issues that are encountered when using couplers 24 and 26.

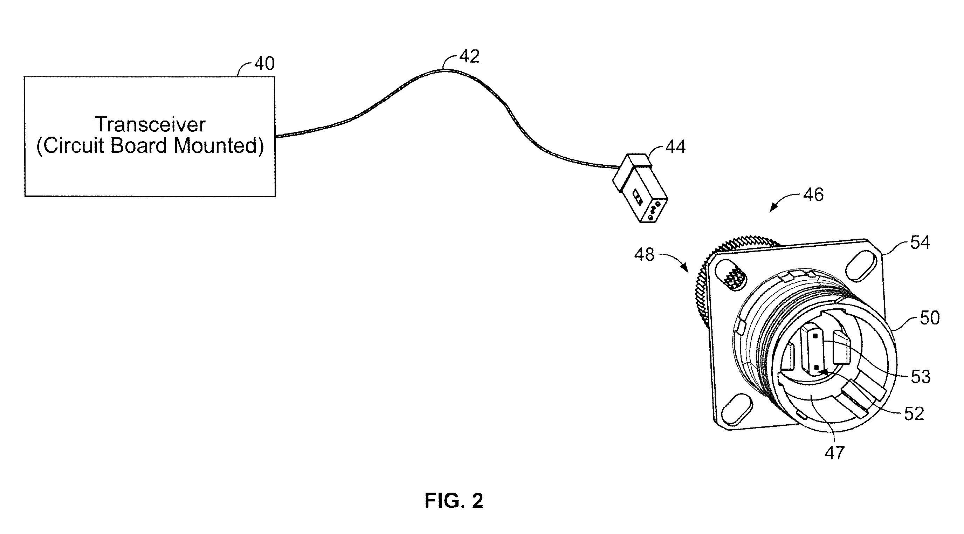

Figure 2 shows a transceiver 40, a fiber optic cable 42 terminating at an MT plug 44, and a connector assembly 46. Connector assembly 46 includes a connector body 47 into which a rear locking MT connector 48 is placed. Connector body 47 is mounted within a connector shell 50. Connector body 47 of connector assembly 46 also includes an MT connector insert 52 that extends from a front of connector body 47. In a preferred embodiment, connector shell 50 is a MIL-C-38999 connector shell, commercially available from Amphenol Aerospace of Sidney, NY, and commonly used across the aerospace industry and in military applications when a sealed interface is desired within an electronic system. MT connector insert 52 includes a front MT connector 53, rear locking MT connector 48, and a plurality of optical fibers (not shown) communicatively coupling front MT connector 53 and rear locking MT connector 48. Since connector assembly 46 includes an integrated rear locking MT connector 48, communicatively coupled to front MT connector 53, there is no need for couplers 24 and 26 as shown in Figure 1, and further described below.

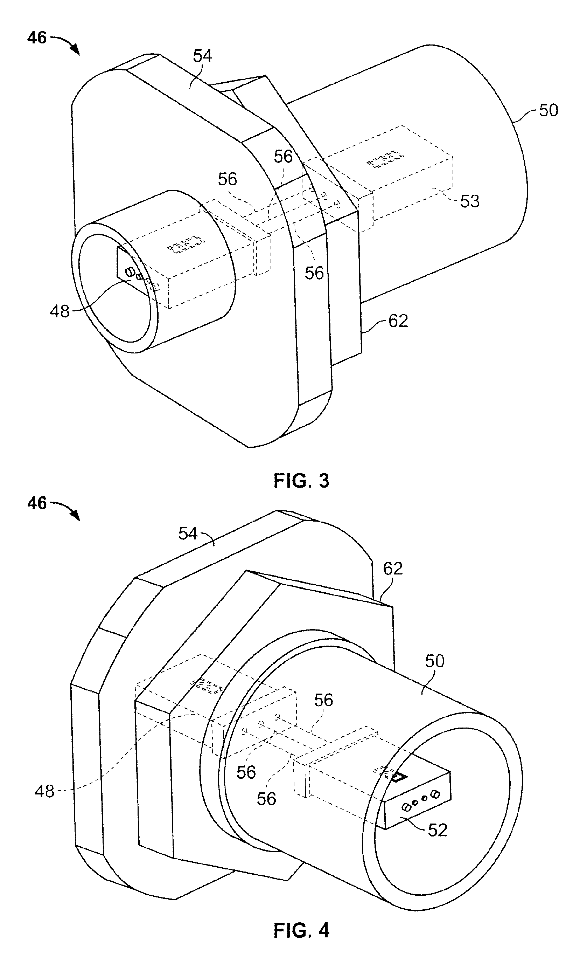

Figure 3 shows a rear perspective view of connector assembly 46 including rear locking MT connector 48. Connector assembly 46 also includes connector shell 50, front MT connector 53, and a mounting flange 54. Connector assembly 46 includes coupling fibers 56, within connector body 47, that communicatively couple MT connector inserts 48 and 52. Connector body 47 is not shown in Figures 3 and 4 for clarity, though, as described above, MT connector inserts 48 and 52 and coupling fibers 56 are embedded within connector body 47. In the illustrated embodiment, three coupling fibers 56 communicatively couple MT connector insert 48 to corresponding positions within MT connector insert 52. In another known embodiment (not shown), twelve fiber optic fibers communicatively couple MT connector insert 48 to corresponding positions within MT connector insert 52.

Figure 4 shows a front perspective view of connector assembly 46 including rear locking MT connector insert 48, front MT connector insert 52 and fiber optics 56 extending between the two, as shown in Figure 3, and where like components are referenced with like reference numerals.

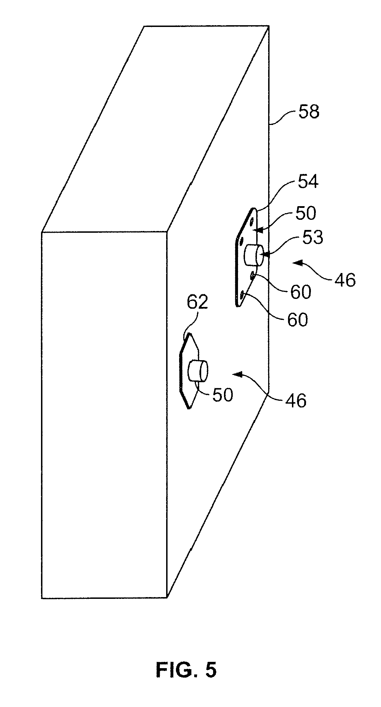

Figure 5 shows two embodiments of connector assembly 46 mounted on a chassis 58 (e.g. a housing) of an electronic package. As described above, connector shell 50 includes a mounting flange 54. There are two common types of MIL-C-38999 connector shells, panel mount style and jam-nut style. Figures 1 and 2 show a panel mount style of connector shell 50 having a plurality of openings 60 therethrough. To mount a panel mount style of connector shell 50 to chassis 58, openings 60 are aligned with a like pattern of bores through chassis 58. Figures 3 and 4 show a jam-nut style of connector shell 50. A jam-nut style of connector shell 50 includes mounting flange 54 and a nut 62. To mount a jam-nut style of connector shell 50 to chassis 58, nut 62 is removed from connector shell 50, connector shell 50 is aligned with a properly sized opening within chassis 58, and nut 62 is reapplied to connector shell 50, such that chassis 58 is between mounting flange 54 and nut 62, holding connector shell 50 to chassis 58.

When connector shell 50 is on chassis 58, the rear of connector assembly 46 is environmentally sealed within chassis 58. However, the front of connector shell 50, which includes front MT connector 53, is outside of sealed chassis 58. Connector shell 50 and the corresponding connector that attaches to connector shell 50, in combination with chassis 58, provide an environmental seal surrounding MT connectors 48 and 53, and the interconnections therebetween 56.

By eliminating the need for couplers 24 and 26 and integrating rear locking MT connector insert 52 within connector shell 50, the space needed inside chassis 58 is reduced as compared to known fiber optic interconnections. Another benefit is increased signal integrity caused by the elimination of one extra connection. Also, product life is increased since 40%-70% of all electronic failures occur at interconnections. Furthermore, assembly time is reduced since there is one less connection to be made.

While the invention has been described in terms of various specific embodiments, those skilled in the art will recognize that the invention can be practiced with modification within the spirit and scope of the claims.

## Claims

1. A connector (30) comprising:
a plurality of optical fibers;
at least two MT fiber optic connectors, communicatively coupled to one another utilizing said plurality of optical fibers, each said MT fiber optic connector comprising a mating end; and
a connector body (47) formed around said MT fiber optic connectors and said plurality of optical fibers, said mating ends of said MT fiber optic connectors accessible from opposite ends of said connector body.

2. A connector (30) according to Claim 1 further comprising a connector shell (32,50) containing said optical fibers, said at least two MT fiber optic connectors, and said connector body (47), said mating ends of said MT fiber optic connectors accessible from opposite ends of said connector shell.

3. A connector (30) according to Claim 2 wherein said connector shell (32,50) comprises a MIL-C-38999 series connector shell.

4. A connector (30) according to Claim 2 wherein at least one end of said connector shell (32,50) is configured to provide an environmental seal for a portion of said connector body (47) and an associated said MT fiber optic connector when said connector shell is coupled to a corresponding mating shell.

5. A connector (30) according to Claim 1 wherein at least one of said MT fiber optic connectors comprises a locking mechanism, said locking mechanism configured to engage a mating MT fiber optic connector.

6. A connector (30) according to Claim 2 wherein said connector shell (32,50) further comprises a mounting flange (54) that radially extends from said connector shell, said mounting flange enabling said fiber optic connector to be attached to a housing.

7. A connector (30) according to Claim 1 wherein each of said at least two MT fiber optic connectors is configured to accept insertion of a mating fiber optic connector.
